# EUROPÄISCHE PATENTSCHRIFT

(11) **EP 0 617 050 B1**
(45) Veröffentlichungstag und Bekanntmachung des Hinweises auf die Patenterteilung: **28.05.1997**
(21) Anmeldenummer: 94104356.4
(22) Anmeldetag: 19.03.1994
(51) Int. Cl.: C08B 30/16, C08J 9/12, B29C 47/38

(54) **Verfahren und Einrichtung zum Herstellen eines geschäumten Produktes oder eines Schaumstoffmaterials aus nicht modifizierter Stärke**
Process and device for obtaining a foamed product or a foam, from non-modified starch
Procédé et dispositif pour l'obtention d'une mousse à base d'amidon non modifié

(30) Priorität: 24.03.1993 DE 4309438; 07.01.1994 DE 4400330
(43) Veröffentlichungstag der Anmeldung: 28.09.1994
(73) Patentinhaber: NATURPACK GmbH, D-92334 Plankstetten (DE)
(72) Erfinder: Franz, Kustner, D-92242 Hirschau (DE)
(74) Vertreter: Graf, Helmut, Dipl.-Ing.

(56) Entgegenhaltungen:
- WO-A-92/08759
- WO-A-92/18325
- CH-A- 264 053
- DD-A- 104 254
- FR-A- 2 310 376
- US-A- 2 995 346
- H. Hermann, Schneckenmaschinen in der Verfahrenstechnik, Springer Verlag,1972, S. 88-90

## Beschreibung

Die Erfindung bezieht sich auf ein Verfahren sowie auf eine Vorrichtung zum Aufschließen und Aufschäumen von nicht modifizierter Stärke, d.h. auf ein Verfahren und eine Vorrichtung zum Herstellen eines geschäumten Produktes oder eines Schaumstoffmaterials durch Aufschließen und Aufschäumen von Stärke beim Extrudieren.

Vorgeschlagen wurde bereits ein geschäumtes Material (Schaumstoffmaterial) aus nicht modifizierter Stärke für die Verwendung als Füll- und Verpackungsmaterial (DE-GM 92 12 899). Dieses Material, für welches unterschiedlichste Verwendungsmöglichkeiten bestehen, hat u.a. den Vorteil, daß es ausschließlich aus einem nachwachsenden Rohstoff besteht und auch ohen Umweltbelastung wieder entsorgt werden kann.

Bekannt ist es weiterhin in der Kunststofftechnik, insbesondere zum Plastifizieren und Mischen, Extruder zu verwenden, die einen sich in Förderrichtung erweiternden oder im Durchmesser vergrößernden Ringspalt aufweisen, der zwischen der Innenfläche eines sich in Förderrichtung im Querschnitt vergrößernden Behandlungsraumes und einer sich ebenfalls in Förderrichtung im Durchmesser vergrößernden Schnecke gebildet ist (FR-A-2 310 376; H. ermann, Scheckenmaschinen in der Verfahrenstechnik, Springerverlag 1972, Seite 88 - 90).

Bekannt ist weiterhin ein Verfahren zum Herstellen von biologisch abbaubarem Verpackungsmaterial (WO-A-92/08759), bei dem Stärke zunächst teilweise einer Dextrin-Bildung unterzogen und anschließend mit einem Zusatz aus einem Polymer-Plastifizierer vermischt wird. Die Mischung wird dann bei einer Temperatur oberhalb von 100°C in einen Raum mit geringem Druck expandiert, um so durch plötzliches Verdampfen von Feuchtigkeit ein Aufschäumen des Produktes zu erreichen.

Aufgabe der Erfindung ist es, ein vereinfachtes Verfahren aufzuzeigen, mit dem die Herstellung eines geschäumten Produktes auf Stärkebasis mit geringem verfahrenstechnischen Aufwand, insbesondere aber auch mit geringem Energieaufwand rationell möglich ist. Aufgabe der Erfindung ist es weiterhin, eine für dieses Verfahren geeignete Vorrichtung aufzuzeigen.

Zur Lösung dieser Aufgabe ist ein Verfahren zum Herstellen eines geschäumten Produktes oder Schaumstoffmaterials aus nicht modifizierter Stärke, **dadurch gekennzeichnet**, daß die nicht modifizierte Stärke über eine Aufgabeöffnung (12) in einen Behandlungsraum (5) eines Extruders mit wenigstens einer dort umlaufenden Schnecke (6) eingebracht wird, die die Stärke von der Aufgabeöffnung (12) in einer Achsrichtung (LA) durch den Behandlungsraum (5) an eine Austrittsöffnung (14, 14') transportiert, der (Behandlungsraum) einen sich in Förderrichtung der Schnecke vergrößernden effektiven Querschnitt besitzt und an der die Schnecke umschließenden Wandung mit wenigstens einem Gewinde (11) oder einer Profilierung versehen ist, so daß die nicht modifizierte Stärke beim Fördern durch den Behandlungsraum aufgeschlossen und durch Volumenvergrößerung ein Aufschäumen der Stärke erfolgt und daß das an der Austrittsöffnung (14, 14') extrudierte, geschäumte Produkt anschließend mit Wasserdampf behandelt wird und eine Vorrichtung zum Durchführen des Verfahrens **gekennzeichnet** durch wenigstens einem Behandlungsraum (5), durch wenigstens eine Aufgabeöffnung (12) zum Einbringen der nicht modifizierten Stärke in den Behandlungsraum, durch wenigstens eine um die Längsachse (LA) des Behandlungsraumes (5) umlaufende Schnecke (6), die im Behandlungsraum zum Transportieren der Stärke von der Aufgabeöffnung in der Achsrichtung (L) durch den Behandlungsraum an eine Austrittsöffnung (14, 14') angeodnet ist, wobei der Behandlungsraum an einer die wenigstens eine Schnecke (6) benachbarten Wandung mit einem Gewinde (10, 11) oder einer Profilierung versehen ist und einen sich in Transportrichtung vergrößernden effektiven Querschnitt aufweist, so daß die Stärke beim Transportieren durch den Behandlungsraum aufgeschlossen und durch Volumenvergrößerung expandiert, sowie durch eine Nachbehandlungseinrichtung (20), an der das an der Austrittsöffnung (14, 14') extrudierte, geschäumte Produkt oder Material mit Wasserdampf behandelt wird ausgebildet.

Bei der Erfindung wird nicht modifizierte Stärke verwendet. Das Aufschließen und Aufschäumen der nicht modifizierten Stärke erfolgt mit dem Behandlungsraum, der in Transportrichtung eine sich vergrößernden effektiven Querschnitt aufweist. An der die Schnecke umgebenden Wandung weist der Behandlungsraum eine Profilierung auf, die zu einer physikalischen Veränderung der Stärke führt, durch die dann in Verbindung mit der Expansion das Aufschließen und Aufschäumen erfolgt. Als Ausgangsmaterial (nicht modifizierte Stärke) wird bevorzugt Maigries verwendet. Durch die Behandlung mit Wasserdampf wird das geschäumte Material in den erforderlichen elastischen Zustand übergeführt.

In Abhängigkeit von der Behandlung von Getreide, Mais oder anderer nicht modifizierter Stärke ist eine unterschiedliche Schaumbildung möglich. Durch unterschiedliche Viskositäten wird die Schaumbildung bzw. deren Stabilisierung begünstigt.

Die hergestellten Schäume weisen unterschiedliche Eigenschaften auf und sind somit in der unterschiedlichsten Weise einsetzbar. Entscheidend für die Eigenschaften ist u.a. auch, ob die Schäume bei höherem oder niedrigem Druck hergestellt wurden.

Weiterbildungen der Erfindung sind Gegenstand der Unteransprüche.

Die Erfindung wird im Folgenden anhand der Figuren an einem Ausführungsbeispiel näher erläutert. Es zeigen:

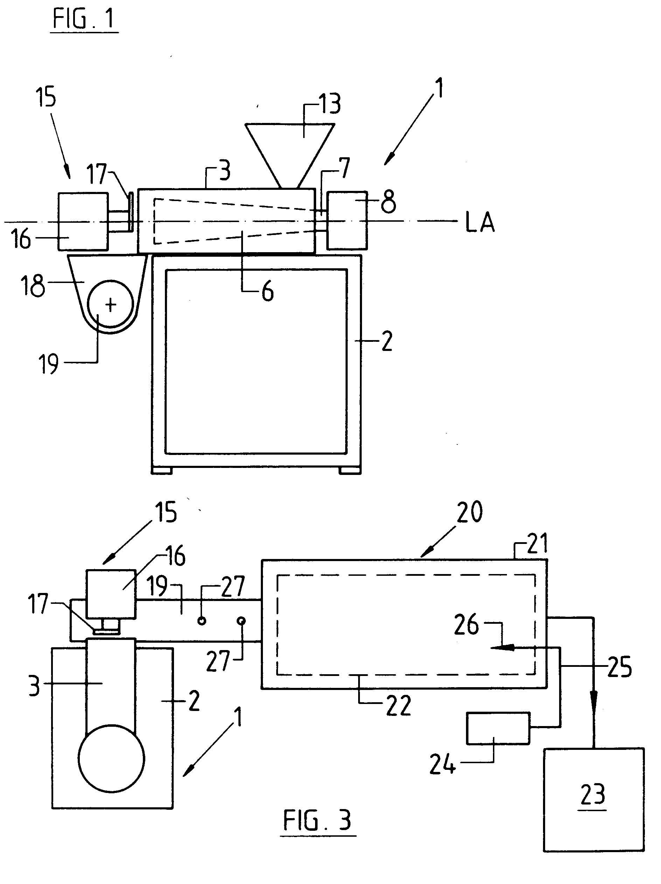

- Fig. 1: in schematischer Darstellung und in Seitenansicht eine Vorrichtung gemäß der Erfindung;
- Fig. 2: in vergrößerter Darstellung und im Schnitt den Extruder der Vorrichtung gemäß Fig. 1;
- Fig. 3: im Blockdiagramm und in Draufsicht eine die erfindungsgemäße Vorrichtung einschließende Produktionsanlage zum Herstellen eines geschäumten Materials aus Stärke.

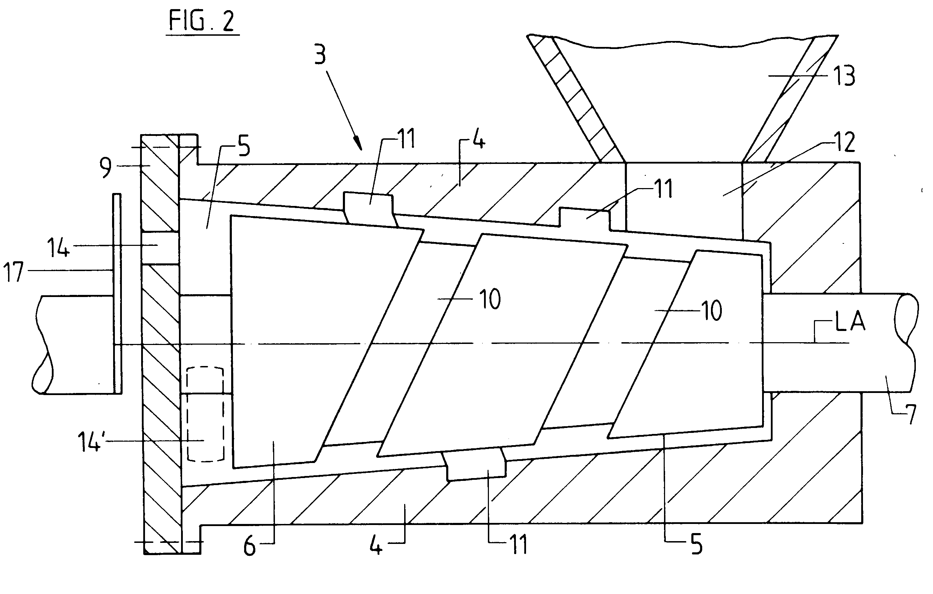

In den Figuren ist 1 eine Vorrichtung, die Teil einer Gesamt-Einrichtung oder Produktionsanlage zum Herstellen eines beispielsweise als Füll- oder Verpackungsmaterial oder als Dämmstoff geeigneten geschäumten Schaumstoff-Materials aus nicht modifizierter Stärke, beispielsweise aus Maisgries ist. Die Vorrichtung 1 besteht aus einem tischartigen Maschinengestell 2, in dem weitere Funktionselemente der Anlage untergebracht sind und an deren Oberseite eine Extrudereinrichtung 3 angeordnet ist. Diese besteht entsprechend der Fig. 2 im einzelnen aus einem Gehäuse 4, in welchem eine sich in Richtung der horizontalen Gehäuselängsachse LA erstreckende und sich zu einem Ende, d.h. bei der für die Fig. 2 gewählten Darstellung zum dortigen linken Ende erweiternde kegelförmige Öffnung 5 (Behandlungsraum) vorgesehen ist. Im Inneren der Öffnung 5 ist eine an die Form dieser Öffnung angepaßte Schnecke 6, die mit ihrer Achse achsgleich mit der Längsachse LA liegt. An dem in der Fig. 2 rechten Ende der Schnecke 6, an dem diese Schnecke ebenso wie die Öffnung 5 den kleineren Durchmesser aufweisen, ist die Schnecke 6 über eine Welle 7 mit einem Antrieb 8 verbunden.

Im Bereich des in der Fig. 2 linken Endes, an dem die Schnecke 6 und auch die Öffnung 5 jeweils den größeren Durchmesser aufweisen, ist die Schnecke 6 in einer Platte 9 um die Achse LA frei drehbar gelagert, die (Platte) die Öffnung 5 am dortigen Ende abschließt. Am in der Fig. 2 rechten Ende ist die Öffnung 5 durch das Gehäuse 4 verschlossen. Mit ihrem linken Ende ist die Schnecke 6 von der Innenfläche der Platte 9 beabstandet.

Die Schnecke 6, deren Schneckenkörper kegelstumpfartig ausgeführt ist, ist an ihrem Umfang mit einem Außengewinde 10 versehen. Ein entsprechendes Innengewinde 11 ist an der die Schnecke 6 umschließenden Innenfläche der Öffnung 5 vorgesehen.

Im einzelnen beträgt das Verhältnis D:L, d.h. das Verhältnis des maximalen Schneckendurchmessers zur Länge der Schnecke 1:5. Das Außengewinde 10 ist ein viergängiges Rechtsgewinde und besitzt ein Profil entsprechend einem Tapetengewinde.

Das Innengewinde 11 ist ein zweigängiges Linksgewinde mit rundem Auslauf.

Im Bereich des kleineren Durchmessers der Öffnung 5 mündet in diese eine Aufgabeöffnung 12, die mit dem Innenraum eines Aufgabetrichters 13 in Verbindung steht, der an der Oberseite des Gehäuses 4 vorgesehen ist.

In der Platte 9 sind mehrere Öffnungen 14 vorgesehen, die als Austrittsöffnungen dienen. Außerhalb des Extruders 3 ist im Bereich der Austrittsöffnungen 14 eine Schneideinrichtung 15 vorgesehen, die im wesentlichen aus einem Antriebsmotor 16 und einem Schneidmesser 17 besteht. Unterhalb der Austrittsöffnungen 14 und der Schneideinrichtung 15 ist ein Auffangtrichter 18 einer Förderschnecke 19 vorgesehen, mit der das die Vorrichtung 1 bzw. die Extrudereinrichtung 3 verlassene Material an eine Nachbehandlungseinrichtung 20 transportiert wird. Letztere besteht im wesentlichen aus einer in einem geschlossenen Gehäuse oder Tunnel 21 angeordneten Behandlungs- und Fördertrommel 22, die um eine beispielsweise gegenüber der Horizontalen etwas geneigte Achse drehbar gelagert und um diese Achse antreibbar ist. Über den Transporteur 19 wird dem einen Ende der Trommel 22 das von der Vorrichtung gelieferte Material zugeführt. Nach der Behandlung verläßt dieses Material die Trommel 22 am anderen Ende und gelangt über eine nicht bezeichnete Fördereinrichtung in ein Silo 23, welches auch eine Abfülleinrichtung zum Abfüllen des Materials beispielsweise in Säcke aufweist.

Mit 24 ist ein Dampferzeuger, d.h. eine Einrichtung zum Erzeugen von Wasserdampf bezeichnet. Über eine Leitung 25 wird der Wasserdampf dem Innenraum der Nachbehandlungsvorrichtung 20 zugeführt, wo der Wasserdampf im Bereich oder innerhalb der Trommel 22 an wenigstens einer Düse 26 austritt. Bei der dargestellten Ausführungsform ist die Düse 26 im Bereich des Endes der Trommel 22 vorgesehen, an dem das von der Vorrichtung 1 gelieferte Material an diese Trommel aufgegeben wird.

Das nach außen hin abgedichtete Gehäuse 21 besitzt beispielsweise eine Länge von 7 m und eine Höhe sowie Breite von etwa 2,5 m. Die Trommel 22 ist beispielsweise im Querschnitt sechskantförmig ausgebildet, und zwar mit einer Schüsselweite oder Seitenlänge von etwa 1,5 m und einer Länge von etwa 6,5 m. Durch innerhalb der Trommel angeordnete Leiterbleche wird die Förderwirkung erreicht.

Zum Herstellen des Materials 27 wird nicht modifizierte Stärke in Form von Maisgries mit einem gewissen Anteil an Wasser über den Trichter 13 der Vorrichtung 1 aufgegeben. Dieses Stärkematerial gelangt über die Aufgabeöffnung 12 in den Innenraum der Extrudereinrichtung 3 bzw. in die Öffnung 5. Bei umlaufend angetriebener Schnecke 6 wird das Material physisch durch die an der Außenfläche der Schnecke 6 sowie an der Innenfläche der Öffnung 5 vorgesehenen Gewinde 10 und 11 und durch die Relativbewegung des Gewindes 10 zum Gewinde 11 derart verändert, daß in Verbindung mit der Entlastung bzw. Expansion, die sich durch den zur Platte 9 hin vergrößernden Querschnitt der Öffnung 5 ergibt, ein Aufschäumen der Stärke erreicht wird, so daß sich am Ende der Schnecke 6 eine geschäumte Masse ergibt, die durch die Austrittsöffnungen 14 extrudiert wird. Der sich hierbei an der Außenseite der Platte 9 im Bereich jeder Austrittsöffnung 14 bildende Strang aus dem geschäumten Stärkematerial wird mittels der Schneideinrichtung 15 in kurze Abschnitte zerschnitten, so daß sich im wesentlichen pellet- oder granulatartige Körper 27 aus dem geschäumten Material ergeben. Diese Körper bzw. dieses pelletartige Material wird dann über den Transporteur 19 der Nachbehandlungseinrichtung 20 zugeführt. Dort wird das pelletartige geschäumte Material mit dem vom Dampferzeuger 24 gelieferten Wasserdampf behandelt und hierdurch in einen elastischen Zustand übergeführt.

Das pelletartige Material 27 kann entweder in dieser pelletartigen Form bzw. in der Form als Schüttgut als Füll- und Verpackungsmaterial verwendet werden. Weiterhin ist es auch möglich, das pelletartige Material 27 in einer Form zu einem Formteil zu pressen, und zwar beispielsweise unter Zugabe eines biologischen Bindemittels, beispielsweise Kasein, Zellulose, Baumharz. Weiterhin ist auch ein Verkleben des pelletartigen Materials unter Anwendung von Wasser oder Wasserdampf möglich, um so aus dem Material 27 Formteile herzustellen.

Die Erfindung wurde voranstehend an einem Ausführungsbeispiel beschrieben. Es versteht sich, daß Änderungen sowie Abwandlungen darin möglich sind.

So ist es beispielsweise möglich, anstelle der stirnseitigen Austrittsöffnung 14, die an der Platte 9 vorgesehen ist, wenigstens eine radiale Austrittsöffnung vorzusehen, die sich dann, wie in Fig. 2 mit unterbrochenen Linien bei 14' dargestellt ist, radial zur Längsachse LA seitlich am Gehäuse befindet und in die Öffnung 5 mündet, wo das in der Fig. 2 linke Ende der Schnecke 6 von der Innenseite der Platte 9 beabstandet ist. Auch an einer derartigen seitlichen Austrittsöffnung 14', mit der eine höhere Leistung für die Vorrichtung 1 erreichbar ist, ist eine der Schneideinrichtung 15 entsprechende Schneideinrichtung vorgesehen.

### Bezugszeichenliste

- 1: Vorrichtung
- 2: Maschinengestell
- 3: Extrudereinrichtung
- 4: Gehäuse
- 5: Öffnung
- 6: Schnecke
- 7: Welle
- 8: Antrieb
- 9: Platte
- 10: Außengewinde
- 11: Innengewinde
- 12: Aufgabeöffnung
- 13: Trichter
- 14, 14': Austrittsöffnung
- 15: Schneideinrichtung
- 16: Antriebsmotor
- 17: Schneidmesser
- 18: Trichter
- 19: Transporteur
- 20: Nachbehandlungsvorrichtung
- 21: Gehäuse
- 22: Trommel
- 23: Silo
- 24: Dampferzeuger
- 25: Verbindungsleitung
- 26: Düse
- 27: pelletartige Material

## Patentansprüche

1. Verfahren zum Herstellen eines geschäumten Produktes oder Schaumstoffmaterials aus nicht modifizierter Stärke, **dadurch gekennzeichnet**, daß die nicht modifizierte Stärke über eine Aufgabeöffnung (12) in einen Behandlungsraum (5) eines Extruders mit wenigstens einer dort umlaufenden Schnecke (6) eingebracht wird, die die Stärke von der Aufgabeöffnung (12) in einer Achsrichtung (LA) durch den Behandlungsraum (5) an eine Austrittsöffnung (14, 14') transportiert, der (Behandlungsraum) einen sich in Förderrichtung der Schnecke vergrößernden effektiven Querschnitt besitzt und an der die Schnecke umschließenden Wandung mit wenigstens einem Gewinde (11) oder einer Profilierung versehen ist, so daß die nicht modifizierte Stärke beim Fördern durch den Behandlungsraum aufgeschlossen und durch Volumenvergrößerung ein Aufschäumen der Stärke erfolgt und daß das an der Austrittsöffnung (14, 14') extrudierte, geschäumte Produkt anschließend mit Wasserdampf behandelt wird.

2. Verfahren nach Anspruch 1, gekennzeichnet durch die Verwendung eines Extruders, bei dem sich der Durchmesser der Schnecke sowie des Behandlungsraumes in Transportrichtung kontinuierlich vergrößert.

3. Verfahren nach Anspruch 1, gekennzeichnet durch die Verwendung eines Extruders, bei dem sich der Durchmesser der Schnecke und des Behandlungsraumes stufenförmig vergrößert.

4. Verfahren nach einem der Ansprüche 1 - 3, gekennzeichnet durch die Verwendung eines Extruders, bei dem sich der wirksame Querschnitt des Behandlungsraumes über die gesamte Länge dieses Behandlungsraumes in Transportrichtung vergrößert.

5. Verfahren nach einem der Ansprüche 1 - 4, dadurch gekennzeichnet, daß das extrudierte und geschäumte Material durch eine Schneideinrichtung (15) in Pellets oder in ein granulatartiges Produkt oder Material zerteilt wird.

6. Verfahren nach einem der Ansprüche 1 - 5, dadurch gekennzeichnet, daß die nicht modifizierte Stärke Maisgries ist.

7. Vorrichtung zum Durchführen des Verfahrens nach einem der Ansprüche 1 - 6, **gekennzeichnet** durch wenigstens einem Behandlungsraum (5), durch wenigstens eine Aufgabeöffnung (12) zum Einbringen der nicht modifizierten Stärke in den Behandlungsraum, durch wenigstens eine um die Längsachse (LA) des Behandlungsraumes (5) umlaufende Schnecke (6), die im Behandlungsraum zum Transportieren der Stärke von der Aufgabeöffnung in der Achsrichtung (L) durch den Behandlungsraum an eine Austrittsöffnung (14, 14') angeodnet ist, wobei der Behandlungsraum an einer die wenigstens eine Schnecke (6) benachbarten Wandung mit einem Gewinde (10, 11) oder einer Profilierung versehen ist und einen sich in Transportrichtung vergrößernden effektiven Querschnitt aufweist, so daß die Stärke beim Transportieren durch den Behandlungsraum aufgeschlossen und durch Volumenvergrößerung expandiert, sowie durch eine Nachbehandlungseinrichtung (20), an der das an der Austrittsöffnung (14, 14') extrudierte, geschäumte Produkt oder Material mit Wasserdampf behandelt wird.

8. Vorrichtung nach Anspruch 7, dadurch gekennzeichnet, daß der Behandlungsraum (5) und die Schnecke (6) zumindest in einem Teilbereich derart ausgeführt sind, daß sich der Durchmesser kontinuierlich vergrößert.

9. Vorrichtung nach Anspruch 7, dadurch gekennzeichnet, daß der Behandlungsraum (5) und die Schnecke (6) zumindest in einem Teilbereich des Behandlungsraumes derart ausgeführt sind, daß sich ihr Durchmesser stufenförmig vergrößert.

10. Vorrichtung nach einem der Ansprüche 7 - 9, dadurch gekennzeichnet, daß sich der wirksame Querschnitt des Behandlungsraumes über die gesamte Länge dieses Behandlungsraumes vergrößert.

11. Vorrichtung nach einem der Ansprüche 7 - 11, gekennzeichnet durch eine Schneideinrichtung (15), mit der das extrudierte und geschäumte Produkt oder Material in Pellets oder in ein granulatartiges Produkt oder Material zerteilt wird.

## Claims

1. Process for manufacturing a foamed product or a foam material from non-modified starch, **characterised in that** the non-modified starch is introduced via a feed opening (12) into a treatment chamber (5) of an extruder with at least one worm (6) rotating therein, which transports the starch from the feed opening (12) in an axial direction (LA) through the treatment chamber (5) to a discharge opening (14, 14'), the (treatment chamber) has an effective cross section which increases in the direction of conveyance of the worm and is provided with at least one thread (11) or one profiling on the wall enclosing the worm, so that the non-modified starch is broken up whilst being conveyed through the treatment chamber and the starch foams due to an increase in its volume, and in that at the discharge opening (14, 14') extruded, foamed product is subsequently treated with water vapour.

2. Process according to claim 1, characterised by the use of an extruder in which the diameter of the worm and of the treatment chamber increases continuously in the direction of transportation.

3. Process according to claim 1, characterised by the use of an extruder in which the diameter of the worm and of the treatment chamber increases in stages.

4. Process according to one of claims 1 - 3, characterised by the use of an extruder in which the effective cross section of the treatment chamber increases in the direction of transportation over the entire length of the said treatment chamber.

5. Process according to one of claims 1 - 4, characterised in that the extruded and foamed material is chopped up into pellets or into a granular product or material by a cutting device (15).

6. Process according to one of claims 1 - 5, characterised in that the non-modified starch is maize grits.

7. Device to effect the process according to one of claims 1 - 6, **characterised** by at least one treatment chamber (5), by at least one feed opening (12) to introduce the non-modified starch into the treatment chamber, by at least one worm rotating around the longitudinal axis (LA) of the treatment chamber (5), which is arranged in the treatment chamber in order to transport the starch from the feed opening in an axial direction (L) through the treatment chamber to a discharge opening (14, 14'), whereby the treatment chamber is provided with a thread (10, 11) or a profiling on one of the walls adjacent to the at least one worm (6) and exhibits an effective cross section which increases in the direction of transportation, so that the starch is broken up during transportation through the treatment chamber and expands due to an increase in volume, and by a subsequent treatment device (20), using which the product or material extruded and foamed from the discharge opening (14, 14') is treated with water vapour.

8. Device according to claim 7, characterised in that the treatment chamber (5) and the worm (6) are designed in at least a partial area in such a way that the diameter continuously increases.

9. Device according to claim 7, characterised in that the treatment chamber (5) and the worm (6) are designed in at least a partial area of the treatment chamber in such a way that their diameter increases in stages.

10. Device according to one of claims 7 - 9, characterised in that the effective cross section of the treatment chamber increases over the entire length of the said treatment chamber.

11. Device according to one of claims 7 - 11, characterised by a cutting device (15), with which the extruded and foamed product or material is chopped into pellets or into a granular product or material.

## Revendications

1. Procédé pour l'obtention d'un produit moussé ou d'une matière en mousse à partir d'amidon non modifié, caractérisé en ce que l'amidon non modifié est amené à travers une ouverture (12) d'admission dans une chambre de traitement (5) d'un extrudeur comportant au moins une vis sans fin (6), qui transporte l'amidon dans une direction axiale (LA) à travers la chambre de traitement (5) de l'ouverture d'admission (12) jusqu'à une ouverture de sortie (14, 14'), laquelle (chambre de traitement) présente une section transversale efficace s'accroissant dans la direction d'avance de la vis sans fin et comporte sur la paroi entourant la vis sans fin au moins un filetage (11) ou un profil, tel que l'amidon non modifié soit désagrégé lors de sa progression à travers la chambre de traitement et qu'il s'ensuive par l'augmentation de volume un moussage de l'amidon et en ce que le produit moussé extrudé à l'ouverture de sortie (14, 14') est finalement traité par de la vapeur d'eau.

2. Procédé selon la revendication 1, caractérisé par l'utilisation d'un extrudeur dans lequel le diamètre de la vis sans fin ainsi que celui de la chambre de traitement augmentent continûment dans la direction du transport.

3. Procédé selon la revendication 1, caractérisé par l'utilisation d'un extrudeur dans lequel le diamètre de la vis sans fin ainsi que celui de la chambre de traitement augmentent par gradins dans la direction du transport.

4. Procédé selon l'une des revendications 1 à 3, caractérisé par l'utilisation d'un extrudeur dans lequel la section transversale efficace de la chambre de traitement augmente dans la direction du transport sur toute la longueur de ladite chambre de traitement.

5. Procédé selon l'une des revendications 1 à 4, caractérisé en ce que la matière extrudée et moussée est divisée au moyen d'un dispositif de coupe (15) en pellets ou en produit ou matière sous forme de granulés.

6. Procédé selon l'une des revendications 1 à 5, caractérisé en ce que l'amidon non modifié est du gruau de maïs.

7. Dispositif pour la mise en oeuvre du procédé selon l'une des revendications 1 à 6, caractérisé par au moins une chambre de traitement (5), par au moins une ouverture d'admission (12) pour amener l'amidon non modifié dans la chambre de traitement, par au moins une vis sans fin (6) disposée selon l'axe longitudinal (LA) de la chambre de traitement (5), qui est agencée dans la chambre de traitement pour transporter l'amidon dans la direction axiale (L) à travers la chambre de traitement de l'ouverture d'admission jusqu'à une ouverture de sortie (14, 14'), la chambre de traitement comportant sur une paroi voisine de la au moins une vis sans fin (6) un filetage (10, 11) ou un profil et présentant une section transversale efficace s'accroissant dans la direction du transport, de telle façon que l'amidon soit désagrégé lors de son transport à travers la chambre de traitement et subisse une expansion par augmentation de volume, ainsi que par un dispositif de traitement postérieur (20) dans lequel la matière ou le produit moussé extrudé par l'ouverture de sortie (14, 14') est traité par de la vapeur d'eau.

8. Dispositif selon la revendication 7, caractérisé en ce que la chambre de traitement (5) et la vis sans fin (6) sont réalisées au moins dans une de leurs parties de manière que le diamètre s'accroisse continûment.

9. Dispositif selon la revendication 7, caractérisé en ce que la chambre de traitement (5) et la vis sans fin (6) sont réalisées au moins dans une partie de la chambre de traitement de manière que leur diamètre s'accroisse par gradins.

10. Dispositif selon l'une des revendications 7 à 9, caractérisé en ce que la section transversale efficace de la chambre de traitement augmente sur toute la longueur de ladite chambre de traitement.

11. Dispositif selon l'une des revendications 7 à 10, caractérisé par un dispositif de coupe (15) avec lequel le produit ou la matière extrudée et moussée est divisée en pellets ou en produit ou matière sous forme de granulés.
